# EUROPÄISCHE PATENTSCHRIFT

(11) **EP 2 167 794 B1**
(45) Veröffentlichungstag und Bekanntmachung des Hinweises auf die Patenterteilung: **11.05.2011**
(21) Anmeldenummer: 07785655.7
(22) Anmeldetag: 18.07.2007
(51) Int. Cl.: F01K 23/06, F01K 25/08, F01K 23/08

(54) **VORRICHTUNG UND VERFAHREN ZUR KRAFT-WÄRMEERZEUGUNG**
DEVICE AND METHOD FOR THE GENERATION OF POWER HEAT
DISPOSITIF ET PROCÉDÉ DE PRODUCTION DE FORCE ET DE CHALEUR

(43) Veröffentlichungstag der Anmeldung: 31.03.2010
(73) Patentinhaber: Gammel Engineering Gmbh, 93326 Abensberg (DE)
(72) Erfinder: RÖHRMOSER, Klaus, 93326 Abensberg (DE)
(74) Vertreter: Kiessling, Christian
(86) Internationale Anmeldenummer: PCT/DE2007/001286
(87) Internationale Veröffentlichungsnummer: WO 2009/010023

(56) Entgegenhaltungen:
- EP-A- 0 017 657
- EP-A- 0 199 902
- EP-A- 0 571 233
- EP-A- 1 217 174
- GB-A- 597 475
- US-A- 5 799 490

## Beschreibung

Die Erfindung betrifft eine Vorrichtung zur Kraft-Wärmeerzeugung mit einer Heißgase erzeugenden Feuerungseinheit, wobei die thermische Energie der Heißgase über einen Gas/Gas-Wärmetauscher nutzbar ist, um mittels eines Kompressors komprimierte Luft für den Betrieb einer mit einem elektrischen Generator gekoppelten Turbine zu erhitzen, wobei die thermische Energie der am Ausgang der Turbine vorliegenden Heißluft über wenigstens einen Gas/Flüssigkeit-Wärmetauscher nutzbar ist, um die Flüssigkeit eines ORC-Kreislaufes (ORC) für den Betrieb einer weiteren, mit einem elektrischen Generator gekoppelten ORC-Turbine zu verdampfen.

Die Erfindung betrifft des Weiteren ein Verfahren zur Kraft-Wärmeerzeugung mit einer Heißgase erzeugenden Feuerungseinheit, wobei die thermische Energie der Heißgase über einen Gas/Gas-Wärmetauscher genutzt wird, um mittels eines Kompressors komprimierte Luft für den Betrieb einer mit einem elektrischen Generator gekoppelten Turbine zu erhitzen, wobei die thermische Energie der am Ausgang der Turbine vorliegenden Heißluft über wenigstens einen Gas/Flüssigkeit-Warmertauscher genutzt wird, um die Flüssigkeit eines ORC-Kreislaufes (ORC) für den Betrieb einer weiteren, mit einem elektrischen Generator gekoppelten ORC-Turbine zu verdampften.

Vorrichtungen und Verfahren der eingangs genannten Art werden im Stand der Technik verwendet wie z.B. aus den Schriften US-A-5799490 und EP-A-0017657, um mittels der thermischen Energie der entstehenden Heißgase über Generatoren einerseits elektrische Energie zu erzeugen und die im Anschluss daran verbleibende thermische Restenergie als Wärme zu nutzen. Die bekannten Vorrichtungen weisen jedoch den Nachteil auf, dass ihr bei etwa 15% bis 20% liegender elektrischer Wirkungsgrad immer noch vergleichsweise gering ist.

Aus EP 0 017 657 ist eine kombinierte Wärmekraftanlage mit einem eine Feuerung aufweisenden Dampferzeuger und einer Gasturbinengruppe bekannt, wobei der Verdichteraustritt der Gasturbirengruppe über ein geschlossenes, im Dampferzeuger angeordnetes Wärmeübertragungssystem mit dem Eintritt der Gasturbine und der Austritt der Gasturbine mit der Feuerung des Dampferzeugers verbunden sind, und wobei zur Verbesserung des wirkungsgrades am Austritt der Gasturbine über eine Zweigleitung zusätzlich ein Abwärmeüberträger angeschlossen ist.

Aus EP 1 217 174 ist eine Turbinenanlage mit einer Verdichtereinheit bekannt, wobei Verdichtereinheit abstromseitig über eine Überströmleitung eine Turbineneinheit nachgeschaltet ist, die mit einem zur Beheizung des aus der Verdichtereinheit abströmenden Arbeitsmediums in die Überströmleitung geschalteten Wärmetauscher versehen ist, um bei hoher Zuverlässigkeit und einen hohen Wirkungsgrad zu erzielen.

Aus EP 0 571 233 ist eine gestufte Ofenbaugruppe bekannt, die zur Verbrennung von Kohle zur Erzeugung von heißen Verbrennungsgasen zur Erhitzen von Luft und Erzeugen von Dampf angepasst ist, umfassend
(a) einen Erststufenofen, der Einlass- und Auslassanschlüsse hat und zum Verbrennen von aus Kohle stammenden Pyrolysegas, um primäre Verbrennungsgasabgänge zu erzeugen,
(b) einen Zweitstufenofen, der angrenzend an den Erststufenofen angeordnet und zum Verbrennen von Holzkohle aus der Pyrolyse der Kohle, um ein sekundäres Verbrennungsgas zu erzeugen, und zum Mischen des resultierenden sekundären Verbrennungsgases mit dem primären Verbrennungsgas aus dem Erststufenofen angepasst ist, wobei der Zweitstufenofen einen oberen Leitungsanschluss zum Ablassen von Verbrennungsgas und untere Leitungsanschlüsse für die Kohlezuführung und Aschenabführung hat, wobei der Zweitstufenofen in seinem oberen Abschnitt einen Wärmeaustauscher zum Erhitzen von Dampf enthält, und
(c) einen Hochtemperatur-Wärmeaustauscher, der im oberen Abschnitt des Erststufenofen zum weitern Erhitzen der durch Leitungseinrichtungen vom Wärmeaustauscher für komprimierte Luft im Zweitstufenofen durchfließenden komprimieren Luft vorgesehen ist, wobei der Hochtemperatur-Wärmeaustauscher hitzebeständige Keramikoberflächen verwendende Rohre enthält.

Aus EP 0 199 902 ist eine kombinierte Heißluftturbinen-Dampfkraftanlage mit einem eine Wirbelfettfeuerung und an diese anschließend einen Rauchgaszug aufweisenden Dampferzeuger bekannt, die mindestens einen von einer Heißluftturbine angetriebenen Luftverdichter aufweist, dessen Austritt über mindestens einen im Dampferzeuger angeordneten Luftwärmeübertrager mit dem Eintritt der Heißluftturbine kommuniziert, deren Austritt an mindestens einen Abluftkessel angeschlossen ist, und mit mindestens einem Wasser-Dampftrenngefäß, das zwischen einem ebenfalls im Dampferzeuger angeordneten Überhitzer geschaltet ist, dessen Austritt mit dem Eintritt einer Dampfturbine verbunden ist, wobei im Abluftkessel mindestens ein Vorüberhitzer angeordnet ist, dessen Eintritt mit dem Dampfaustritt des Wasser-Dampftrenngefäßes und dessen Auftritt mit dem Eintritt des Überhitzers kommuniziert, und dass der Luftwärmeübertrager im Wesentlichen vollständig im Wirbelbett angeordnet ist.

Aufgabe der Erfindung ist es, eine Vorrichtung und ein Verfahren zur Kraft-Wärmeerzeugung zu schaffen, die einen im Vergleich zum Stand der Technik verbesserten Wirkungsgrad aufweisen und dabei verschleiß- und wartungsarm sind.

Für eine Vorrichtung der eingangs genannten Art wird diese Aufgabe dadurch gelöst, dass am Ausgang der ORC-Turbine vorliegende ORC-Gas in einem Nutzwärme liefernden Kondensator kondensiert und die dabei wiedergewonnene ORC-Flüssigkeit über eine Pumpe in den Gas/Flüssigkeit-Wärmetauscher zurückleitbar ist, und dass das am Ausgang der ORC-Turbine vorliegende ORC-Gas über eine erste Seite eines Regenerator in den Kondensator einströmt und ein Teil wiedergewonnene ORC-Flüssigkeit über eine zweite Seite des Regenerators in den Gas/Flüssigkeit-Wärmetauscher zurückleitbar ist, und ein anderer Teil der am Ausgang des Kondensators vorliegenden ORC-Flüssigkeit über einen stromabwärts des Gas/Gas-Wärmetauschers angeordneten Vorwärm-Närmetauscher mindestens indirekt in den Gas/Flüssigkeit-Wärmetauscher zurückleitbar ist.

Für ein Verfahren der eingangs genannten Art wird diese Aufgabe dadurch gelöst, dass das am Ausgang der ORC-Turbine vorliegende ORC-Gas in einem Nutzwärme liefernden Kondensator kondensiert und die dabei wiedergewonnene ORC-Flüssigkeit über eine Pumpe in den Gas/Flüssigkeit-Wärmetauscher zurückgeleitet wird, und dass das am Ausgang der ORG-Turbine vorliegende ORC-Gas über eine erste Seite eines Regenerator in den Kondensator einströmt und ein Teil wiedergewonnene ORC-Flüssigkeit über eine zweite Seite des Regenerators in den Gas/Flüssigkeit-Wärmetauscher zurückgeleitet wird und ein anderer Teil der am Ausgang des Kondensators vorliegenden ORC-Flüssigkeit über einen stromabwärts des Gas/Gas-Wärmetauschers angeordneten Vorwärm-Wärmetauscher mindestens indirekt in den Gas/Flüssigkeit-Wärmetauscher zurückgeleitet wird.

Bevorzugte Ausführungsformen der Erfindung sind Gegenstand der jeweiligen Unteransprüche der unabhängigen Patentansprüche 1 und 14, wobei die Unteransprüche des Verfahrensanspruchs 14 den Unteransprüchen des Vorrichtungsanspruchs 1 äquivalent entsprechen und eine gleiche Wirkung bedingen.

Bei der erfindungsgemäßen Vorrichtung und bei dem erfindungsgemäßen Verfahren wird durch die Merkmalskombination, dass die thermische Energie der am Ausgang der Turbine vorliegenden Heißluft über wenigstens einen Gas/Flüssigkeit-Wärmetauscher nutzbar ist, um die Flüssigkeit eines ORC-Kreislaufes für den Betrieb einer weiteren, mit einem elektrischen Generator gekoppelten ORC-Turbine zu verdampfen, erreicht, dass eine kaskadisierte mehrstufige Nutzung der bei einem Verbrennungsprozess entstehenden thermischen Energie realisiert ist, wobei für jeweils unterschiedliche Temperaturbereiche ein jeweils temperaturoptimiertes Fluidmedium für eine Wandlung von thermischer in mechanische Energie eingesetzt wird. Der Wirkungsgrad einer erfindungsgemäßen Vorrichtung liegt dementsprechend bei etwa 25%, was eine erhebliche Verbesserung gegenüber dem Stand der Technik bedeutet.

Gemäß einer ersten bevorzugten Ausführungsform der erfindungsgemäßen Vorrichtung ist vorgesehen, dass für die Kühlung des Kondensators eine Wärmetauschereinheit mit einem Kühlkreislauf vorgesehen, dessen thermische Energie als Nutzwärme einer weiteren Verbrauchereinheit zuführbar ist.

Gemäß einer anderen bevorzugten Ausführungsform der erfindungsgemäßen Vorrichtung ist vorgesehen, dass die am Ausgang des Gas/Flüssigkeit-Wärmetauschers vorliegende Heißluft ist vorzugsweise als vorgewärmte Verbrennungsluft für die Feuerungseinheit nutzbar. Im Förderweg der am Ausgang des Gas/Flüssigkeit-Wärmetauschers vorliegenden Heißluft ist dabei stromaufwärts der Feuerungseinheit vorzugsweise eine oder mehr Steuereinrichtungen für eine Dosierung der Heißluftzufuhr vorgesehen.

Gemäß einer weiteren bevorzugten Ausführungsform der erfindungsgemäßen Vorrichtung ist vorgesehen, dass ein Teil der am Ausgang des Gas/Flüssigkeit-Wärmetauschers vorliegenden Heißluft zur Trocknung von in einer heißluftumströmten Trocknungseinrichtung eingebrachter feuchter Biomasse nutzbar ist, die in getrockneter Form für eine Feuerung in der Feuerungseinheit vorgesehen ist. Die Biomasse ist dabei vorzugsweise aber nicht notwendigerweise von Holzhackschnitzeln gebildet.

Des Weiteren ist vorzugsweise im Förderweg der am Ausgang des Gas/Flüssigkeit-Wärmetauschers vorliegenden Heißluft stromaufwärts der Trocknungseinrichtung eine Steuereinrichtung für eine Dosierung der Heißluftzufuhr vorgesehen.

Gemäß einer wichtigen bevorzugten Ausführungsform der erfindungsgemäßen Vorrichtung ist vorgesehen, dass im ORC-Kreislauf stromaufwärts des Gas/Flüssigkeit-Wärmetauschers und im Förderweg der Heißluft aus der Turbine stromabwärts des Gas/Flüssigkeit-Wärmetauschers ein weiterer Wärmetauscher zum Vorwärmen der ORC-Flüssigkeit angeordnet ist.

Des Weiteren können im Förderweg der in der Feuerungseinheit erzeugten Heißgase stromabwärts des Gas/Gas-Wärmetauschers vorzugsweise ein Rauchgasreiniger sowie eine Ventilationseinrichtung zum Fördern der Heißgase vorgesehen sein. Die Restwärme der aus einer Ventilationseinrichtung austretenden Heißgase ist vorzugsweise als Nutzwärme einer weiteren Verbrauchereinheit zuführbar.

Die erfindungsgemäße Vorrichtung wird im Folgenden anhand zweier bevorzugter Ausführungsformen erläutert, die in den Figuren der Zeichnung dargestellt sind. Darin zeigen:
- Fig. 1: eine einfache bevorzugte Ausführungsform der erfindungsgemäßen Vorrichtung, dargestellt in einem schematischen Blockdiagramm;
- Fig. 2: eine standardmäßige bevorzugte Ausführungsform der erfindungsgemäßen Vorrichtung, dargestellt in einem schematischen Blockdiagramm.

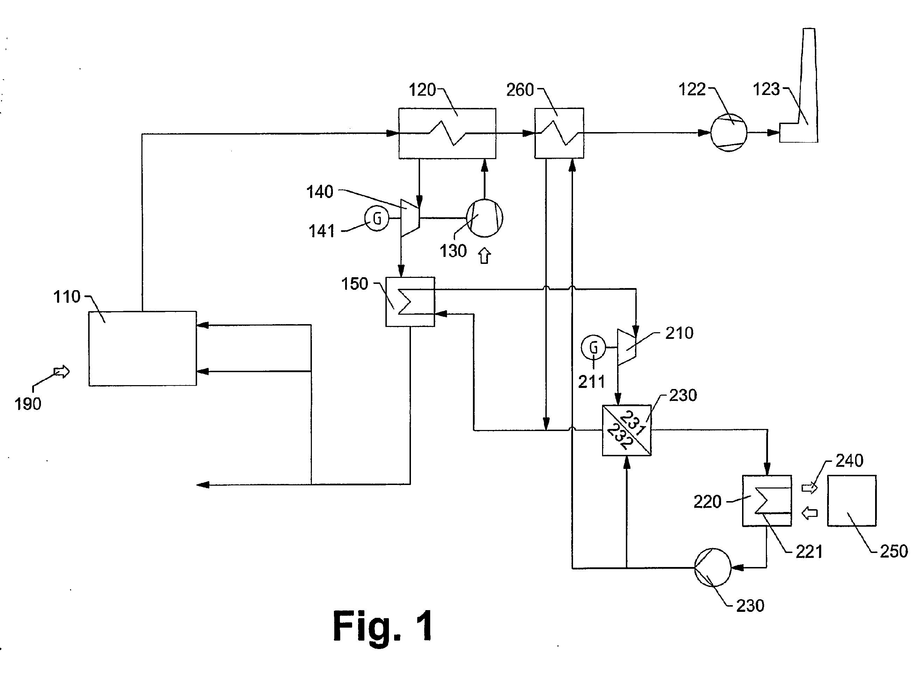

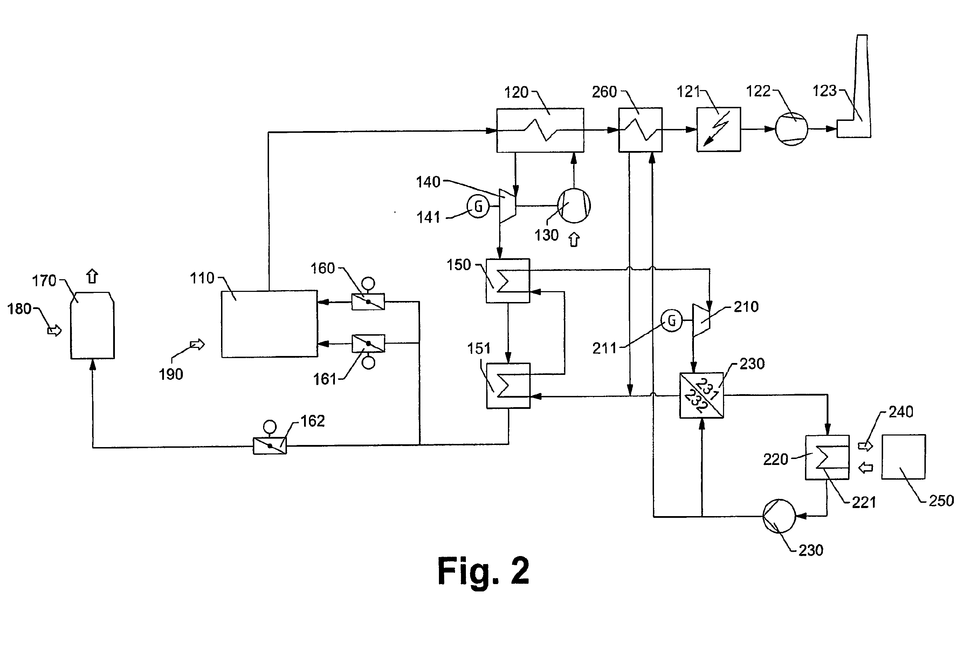

Die in den Figuren 1 und 2 dargestellten erfindungsgemäßen Vorrichtungen (100) zur Kraft-Wärmeerzeugung enthalten eine Heißgase erzeugende Feuerungseinheit (110), wobei die thermische Energie der Heißgase über einen Gas/GasWärmetauscher (120) nutzbar ist, um mittels eines Kompressors (130) komprimierte Luft für den Betrieb einer mit einem elektrischen Generator (141) gekoppelten Turbine (140) zu erhitzen. Die thermische Energie der am Ausgang der Turbine (140) vorliegenden Heißluft ist dabei über wenigstens einen Gas/Flüssigkeit-Wärmetauscher (150) nutzbar, um die Flüssigkeit eines ORC-Kreislaufes (ORC) für den Betrieb einer weiteren, mit einem elektrischen Generator (211) gekoppelten ORC-Turbine (210) zu verdampfen.

Das am Ausgang der ORC-Turbine (210) vorliegende ORC-Gas kondensiert in einem Nutzwärme liefernden Kondensator (220), wobei die dabei wiedergewonnene ORC-Flüssigkeit über eine Pumpe (230) in den Gas/Flüssigkeit-Wärmetauscher (150) zurückleitbar ist. Das am Ausgang der ORC-Turbine (210) vorliegende ORC-Gas strömt über eine erste Seite (231) eines Regenerators (230) in den Kondensator (220) ein, und die wiedergewonnene ORC-Flüssigkeit ist über eine zweite Seite (232) des Regenerators (230) in den Gas/Flüssigkeit-Wärmetauscher (150) zurückleitbar.

Für die Kühlung des Kondensators (220) ist dabei eine Wärmetauschereinheit (221) mit einem Kühlkreislauf vorgesehen, dessen thermische Energie als Nutzwärme (240) einer weiteren Verbrauchereinheit (250) zuführbar ist.

Bei der in Figur 2 dargestellten Ausführungsform der Erfindung ist ein Teil der am Ausgang des Kondensators (220) vorliegenden ORC-Flüssigkeit über einen stromabwärts des Gas/Gas-Wärmetauschers (120) angeordneten Vorwärm-Wärmetauscher (260) und weiter über den weiteren Wärmetauscher (151) in den Gas/Flüssigkeit-Wärmetauscher (150) zurückleitbar. Bei dieser Ausführungsform ist des Weiteren die am Ausgang des Gas/Flüssigkeit-Wärmetauschers (150) vorliegende Heißluft als vorgewärmte Verbrennungsluft für die Feuerungseinheit (110) nutzbar, wobei im Förderweg der am Ausgang des Gas/Flüssigkeit-Wärmetauschers (150) vorliegende Heißluft stromaufwärts der Feuerungseinheit (110) zwei Steuereinrichtungen (160, 161) für eine Dosierung der Heißluftzufuhr vorgesehen sind.

Ein Teil der am Ausgang des Gas/Flüssigkeit-Wärmetauschers (150) vorliegende Heißluft ist dabei zur Trocknung von in einer heißluftumströmten Trocknungseinrichtung (170) eingebrachter feuchter als Holzhackschnitzeln ausgeführte Biomasse (180) nutzbar, die in getrockneter Form (190) für eine Feuerung in der Feuerungseinheit (110) vorgesehen ist. Im Förderweg der am Ausgang des Gas/Flüssigkeit-Wärmetauschers (150) vorliegenden Heißluft ist des weiteren stromaufwärts der Trocknungseinrichtung (170) eine Steuereinrichtung (162) für eine Dosierung der Heißluftzufuhr vorgesehen.

Bei der in Figur 2 dargestellten Ausführungsform der Erfindung ist im ORC-Kreislauf stromaufwärts des Gas/Flüssigkeit-Wärmetauschers (150) und im Förderweg der Heißluft aus der Turbine (140) stromabwärts des Gas/Flüssigkeit-Wärmetauschers (150) ein weiterer Wärmetauscher (151) zum Vorwärmen der ORC-Flüssigkeit vorgesehen. Des Weiteren enthält diese Ausführungsform der Erfindung im Förderweg der in der Feuerungseinheit (110) erzeugten Heißgase stromabwärts des Gas/Gas-Wärmetauschers (120) einen Rauchgasreiniger sowie eine Ventilationseinrichtung (122) zum Fördern der Heißgase. Die Restwärme der aus der Ventilationseinrichtung (122) austretenden Heißgase ist wiederum als Nutzwärme einer weiteren Verbrauchereinheit (123) zuführbar.

Die oben erläuterten Ausführungsbeispiele der Erfindung dienen lediglich dem Zweck eines besseren Verständnisses der durch die Ansprüche definierten erfindungsgemäßen. Lehre, die als solche durch die Ausführungsbeispiele nicht eingeschränkt sind.

## Patentansprüche

1. Vorrichtung (100) zur Kraft-Wärmeerzeugung mit einer Heißgase erzeugenden Feuerungseinheit (110), wobei die thermische Energie der Heißgase über einen Gas/GasWärmetauscher (120) nutzbar ist, um mittels eines Kompressors (130) komprimierte Luft für den Betrieb einer mit einem elektrischen Generator (141) gekoppelten Turbine (140) zu erhitzen, wobei die thermische Energie der am Ausgang der Turbine (140) vorliegenden Heißluft über wenigstens einen Gas/Flüssigkeit-Wärmetauscher (150) nutzbar ist, um die Flüssigkeit eines ORC-Kreislaufes (ORC) für den Betrieb einer weiteren, mit einem elektrischen Generator (211) gekoppelten ORC-Turbine (210) zu verdampfen, **dadurch gekennzeichnet, dass** am Ausgang der ORC-Turbine (210) vorliegende ORC-Gas in einem Nutzwärme liefernden Kondensator (220) kondensiert und die dabei wiedergewonnene ORC-Flüssigkeit über eine Pumpe (230) in den Gas/Flüssigkeit-Wärmetauscher (150) zurückleitbar ist, und dass das am Ausgang der ORC-Turbine (210) vorliegende ORC-Gas über eine erste Seite (231) eines Regenerator (230) in den Kondensator (220) einströmt und ein Teil wiedergewonnene CRC-Flüssigkeit über eine zweite Seite (232) des Regenerators (230) in den Gas/Flüssigkeit-Wärmetauscher (150) zurückleitbar ist und ein anderer Teil der am Ausgang des Kondensators (220) vorliegenden ORC-Flüssigkeit über einen stromabwärts des Gas/Gas-Wärmetauschers (20) angeordneten Vorwärm-Wärmetauscher (260) mindestens indirekt in den Gas/Flüssigkeit-Wärmetauscher (150) zurückleitbar ist.

2. Vorrichtung nach Anspruch 1, **dadurch gekennzeichnet, dass** für die Kühlung des Kondensators (220) eine Wärmetauschereinheit (221) mit einem Kühlkreislauf vorgesehen ist, dessen thermische Energie als Nutzwärme (240) einer weiteren Verbrauchereinheit (250) zuführbar ist.

3. Vorrichtung nach einem der vorhergehenden Ansprüche, **dadurch gekennzeichnet, dass** die am Ausgang des Gas/Flüssigkeit-Wärmetauschers (150) vorliegende Heißluft als vorgewärmte Verbrennungsluft für die Feuerungseinheit (110) nutzbar ist.

4. Vorrichtung nach Anspruch 3, **dadurch gekennzeichnet, dass** im Förderweg der am Ausgang des Gas/Flüssigkeit-Wärmetauschers (150) vorliegende Heißluft stromaufwärts der Feuerungseinheit (110) eine oder mehr Steuereinrichtungen (160, 161) für eine Dosierung der Heißluftzufuhr vorgesehen ist.

5. Vorrichtung nach einem der vorhergehenden Ansprüche, **dadurch gekennzeichnet**, das ein Teil der am Ausgang des Gas/Flüssigkeit-Närmetauschers (150) vorliegende Heißluft zur Trocknung von in einer heißluftumströmten Trocknungseinrichtung (170) eingebrachter feuchter Biomasse (180) nutzbar ist, die in getrockneter Form (190) für eine Feuerung in der Feuerungseinheit (110) vorgesehen ist.

6. Vorrichtung nach Anspruch 5, **dadurch gekennzeichnet, dass** die Biomasse (180) von Holzhackschnitzeln gebildet ist.

7. Vorrichtung nach einem der Ansprüche 5 oder 6, **dadurch gekennzeichnet, dass** im Förderweg der am Ausgang des Gas/Flüssigkeit-Wärmetauschers (150) vorliegenden Heißluft stromaufwärts der Trocknungseinrichtung (170) eine Steuereinrichtung (162) für eine Dosierung der Heißluftzufuhr vorgesehen ist.

8. Vorrichtung nach einem der vorhergehenden Ansprüche, **dadurch gekennzeichnet, dass** im ORC-Kreislauf stromaufwärts des Gas/Flüssigkeit-Wärmetauschers (150) und im Förderweg der Heißluft aus der Turbine (140) stromabwärts des Gas/Flüssigkeit-Wärmetauschers (150) ein weiterer Wärmetauscher (151) zum Vorwärmen der ORC-Flüssigkeit vorgesehen ist.

9. Vorrichtung nach einem der vorhergehenden Ansprüche, **dadurch gekennzeichnet, dass** im Förderweg der in der Feuerungseinheit (110) erzeugen Heißgase stromabwärts des Gas/Gas-Wärmetauschers (120) ein Rauchgasreiniger (121) vorgesehen ist.

10. Vorrichtung nach einem der vorhergehenden Ansprüche, **dadurch gekennzeichnet, dass** im Förderweg der in der Feuerungseinheit (110) erzeugen Heißgase stromabwärts des Gas/Gas-Wärmetauschers (120) eine Ventilationseinrichtung (122) zum Fördern der Heißgase vorgesehen ist.

11. Vorrichtung nach Anspruch 10, **dadurch gekennzeichnet, dass** die Restwärme der aus der Ventilationseinrichtung (122) austretenden Heißgase als Nutzwärme einer weiteren Verbrauchereinheit (123) zuführbar ist.

12. Verfahren zur Kraft-Wärmeerzeugung mit einer Heißgase erzeugende Feuerungseinheit (110), wobei die thermische Energie der Heißgase über einen Gas/Gas-Wärmetauscher (120) genutzt wird, um mittels eines Kompressors (130) komprimierte Luft für den Betrieb einer mit einem elektrischen Generator (141) gekoppelten Turbine (140) zu erhitzen, wobei die thermische Energie der am Ausgang der Turbine (140) vorliegenden Heißluft über wenigstens einen Gas/Flüssigkeit-Wärmetauscher (150) genutzt wird, um die Flüssigkeit eines ORC-Kreislaufes (ORC) für den Betrieb einer weiteren, mit einem elektrischen Generator (211) gekoppelten ORC-Turbine (210) zu verdampfen, **dadurch gekennzeichnet, dass** das am Ausgang der ORC-Turbine (210) vorliegende ORC-Gas in einem Nutzwärme liefernden Kondensator (220) kondensiert und die dabei wiedergewonnene ORC-Flüssigkeit über eine Pumpe (230) in den Gas/Flüssigkeit-Wärmetauscher (150) zurückgeleitet wird, und dass das am Ausgang der ORC-Turbine (210) vorliegenden ORC-Gas über eine erste Seite (231) eines Regenerator (230) in den Kondensator (220) einströmt und ein Teil wiedergewonnene ORC-Flüssigkeit über eine zweite Seite (232) des Regenerators (230) in den Gas/Flüssigkeit-Wärmetauschers (150) zurückgeleitet wird und ein anderer Teil der am Ausgang des Kondensators (220) vorliegenden ORC-Flüssigkeit über einen stromabwärts des Gas/Gas-Wärmetauschers (120) angeordneten Vorwärm-Wärmetauscher (260) mindestens indirekt in den Gas/Flüssigkeit-Wärmetauschers (150) zurückgeleitet wird.

13. Verfahren nach Anspruch 12, **dadurch gekennzeichnet, dass** für die Kühlung des Kondensators (220) eine Wärmetauschereinheit (221) mit einem Kühlkreislauf vorgesehen ist, dessen thermische Energie als Nutzwärme (240) einer weiteren Verbrauchereinheit (250) zugeführt wird.

14. Verfahren nach einem der vorhergehenden Ansprüche, **dadurch gekennzeichnet, dass** die am Ausgang des Gas/Flüssigkeit-Wärmetauschers (150) vorliegende Heißluft als vorgewärmte Verbrennungsluft für die Feuerungseinheit (110) verwendet wird.

15. Verfahren nach Anspruch 14, **dadurch gekennzeichnet, dass** im Förderweg der am Ausgang des Gas/Flüssigkeit-Wärmetauschers (150) vorliegende Heißluft stromaufwärts der Feuerungseinheit (110) eine Dosierung der Heißluftzufuhr mittels einer oder mehr Steuereinrichtungen (160, 161) erfolgt.

16. Verfahren nach einem der Ansprüche 14 oder 15, **dadurch gekennzeichnet, dass** ein Teil der am Ausgang des Gas/Flüssigkeit-Wärmetauschers (150) vorliegende Heißluft zur Trocknung von in einer heißluftumströmten Trocknungseinrichtung (170) gelagerter feuchter Biomasse (180) genutzt wird, die in getrockneter Form (190) für eine Feuerung in der Feuerungseinheit (110) verwendet wird.

17. Verfahren nach Anspruch 16, **dadurch gekennzeichnet, dass** die Biomasse (180) von Holzhackschnitzeln gebildet wird.

18. Verfahren nach einem der Ansprüche 16 oder 17, **dadurch gekennzeichnet, dass** im Förderweg der am Ausgang des Gas/Flüssigkeit-Wärmetauschers (150) vorliegenden Heißluft stromaufwärts der Trocknungseinrichtung (170) eine Dosierung der Heißluftzufuhr mittels einer Steuereinrichtung (162) erfolgt.

19. Verfahren nach einem der Ansprüche 12 bis 18, **dadurch gekennzeichnet, dass** im ORC-Kreislauf stromaufwärts des Gas/Flüssigkeit-Wärmetauschers (150) und im Förderweg der Heißluft aus der Turbine (140) stromabwärts des Gas/Flüssigkeit-Wärmetauschers (150) ein weiterer Wärmetauscher (151) zum Vorwärmen des Ort-Flüssigkeit verwendet wird.

20. Verfahren nach einem der Ansprüche 12 bis 19, **dadurch gekennzeichnet, dass** im Förderweg der in der Feuerungseinheit (110) erzeugen Heißgase stromabwärts des Gas/Gas-Wärmetauschers (120) ein Rauchgasreiniger (121) verwender wird.

21. Verfahren nach einem der Ansprüche 12 bi 20, **dadurch gekennzeichnet, dass** im Förderweg der in der Feuerungseinheit (110) erzeugen Heißgase stromabwärts des Gas/Gas-Wärmetauschers (120) eine Ventilationseinrichtung (122) zum Fördern der Heißgase verwendet wird.

22. Verfahren nach Anspruch 21, **dadurch gekennzeichnet, dass** die Restwärme der aus der Ventilationseinrichtung (122) austretenden Heißgase als Nutzwärme für eine weitere Verbrauchereinheit (123) verwendet wird.

## Claims

1. A device (100) for generating thermal power, comprising a firing unit (110) capable of producing hot gases, wherein the thermal energy of said hot gases is utilized via a gas/gas heat exchanger (120) for heating compressed air compressed by a compressor (130) for running a turbine (140) coupled to an electricity generator (141) and the thermal energy of the hot air present at the outlet of said turbine (140) is utilized via at least one gas/liquid heat exchanger (150) for the purpose of vaporizing the liquid in an ORC circuit (ORC) for running another ORC turbine (210) coupled to an electricity generator (211), **characterized in that** ORC gas present at the outlet of said ORC turbine (210) is condensed in a condenser (220) donating useful heat and the thus recovered ORC liquid can be recirculated through a pump (230) to said gas/liquid heat exchanger (150) and that the ORC gas present at the outlet of said ORC turbine (210) flows through a first side (231) of a regenerator (230) to said condenser (220) and the thus recovered ORC liquid can be recirculated through a second side (232) of said regenerator (230) to said gas/liquid heat exchanger (150).

2. The device as defined in claim 1, **characterized in that** for cooling said condenser (220) a heat exchanger unit (221) is provided which has a cooling loop and the thermal energy of which can be fed as useful heat (240) to another consumer unit (250).

3. The device as defined in any one of the previous claims, **characterized in that** the hot air present at the outlet of said gas/liquid heat exchanger (150) can be utilized as preheated combustion air for the firing unit (110).

4. The device as defined in claim 3, **characterized in that** in the path of flow of the hot air present at the outlet of said gas/liquid heat exchanger (150) there are provided, upstream of the firing unit (110), one or more control devices (160, 161) for metering the hot-air feed.

5. The device as defined in any one of the previous claims, **characterized in that** a portion of the hot air present at the outlet of said gas/liquid heat exchanger (150) can be utilized for drying a moist biomass (180) which is located in a drying device (170) externally flushed by hot air and which in the dry state (190) is suitable for use as fuel for said firing unit (110).

6. The device as defined in claim 5, **characterized in that** said biomass (180) is in the form of wood chips.

7. The device as defined in claim 5 or claim 6, **characterized in that** in the path of flow of the hot air present at the outlet of said gas/liquid heat exchanger (150) and upstream of said drying device (170) there is provided a control device (162) for metering the hot-air feed.

8. The device as defined in any one of the previous claims, **characterized in that** a further heat exchanger (151) is provided in said ORC circuit upstream of said gas/liquid heat exchanger (150) and in the path of flow of the hot air coming from said turbine (140) downstream of said gas/liquid heat exchanger (150), for the purpose of preheating said ORC liquid.

9. The device as defined in any one of the previous claims, **characterized in that** in the path of flow of the hot gases produced in said firing unit (110) there is provided a flue gas dust collector (121) downstream of the gas/gas heat exchanger (120).

10. The device as defined in any one of the previous claims, **characterized in that** in the path of flow of the hot gases produced in said firing unit (110) there is provided a ventilating device (122) downstream of said gas/gas heat exchanger (120) to assist the outflow of said hot gases.

11. The device as defined in claim 10, **characterized in that** the residual heat of the hot gases emerging from said ventilating device (122) can be fed as useful heat to another consumer unit (123).

12. A method for the production of thermal power by means of a firing unit (110) capable of producing hot gases, wherein the thermal energy of said hot gases is utilized via a gas/gas heat exchanger (120) for the purpose of heating air compressed by a compressor (130) for running a turbine (140) coupled to an electricity generator (141) and the thermal energy of the hot air present at the outlet of said turbine (140) is utilized via at least one gas/liquid heat exchanger (150) for the purpose of vaporizing the liquid in an ORC circuit (ORC) for running another ORC turbine (210) coupled to an electricity generator (211), **characterized in that** the ORC gas present at the outlet of said ORC turbine (210) is condensed in a condenser (220) donating useful heat and the thus recovered ORC liquid is recirculated via a pump (230) to said gas/liquid heat exchanger (150) and that the ORC gas present at the outlet of the ORC turbine (220) flows through a first side (231) of a regenerator (239) into said condenser (220) and a portion of the recovered ORC liquid is recycled through a second side (232) of said regenerator (230) to said gas/liquid heat exchanger (150), and another portion of said ORC liquid present at the outlet of said condenser (220) is recycled through a preheating heat exchanger (260) disposed downstream of said gas/gas heat exchanger (120) at least indirectly to said gas/liquid heat exchanger (159).

13. The method as defined in claim 12, **characterized in that** for the purpose of cooling said condenser (220), there is provided a heat exchanger unit (221) having a cooling loop whose thermal energy is fed as useful heat (240) to another consumer unit (250).

14. The method as defined in any one of the previous claims, **characterized in that** the hot air present at the outlet of said gas/liquid heat exchanger (150) is utilized as preheated combustion air for the firing unit (110).

15. The method as defined in claim 14, **characterized in that** in the path of flow of the hot air present at the outlet of said gas/liquid heat exchanger (150) metering of the hot-air feed is effected, upstream of the firing unit (110), by means of one or more control devices (160, 161).

16. The method as defined in claim 14 or claim 15, **characterized in that** a portion of the hot air present at the outlet of said gas/liquid heat exchanger (150) is utilized for drying a moist biomass (180), which is located in a drying device (170) externally flushed by hot air and which in the dry state (190) is used as fuel for said firing unit (110).

17. The method as defined in claim 16, **characterized in that** said biomass (180) is in the form of wood chips,

18. The method as defined in claim 16 or claim 17, **characterized in that** in the path of flow of the hot air present at the outlet of said gas/liquid heat exchanger (150) metering of the hot-air feed is effected, upstream of the drying device (170), by means of a control device (162).

19. The method as defined in any one of claims 12 to 18, **characterized in that** in said ORC circuit another heat exchanger (151) is used for preheating the ORC liquid upstream of said gas/liquid heat exchanger (150) and in the path of flow of said hot air coming from said turbine (140) downstream of said gas/liquid heat exchanger (150).

20. The method as defined in any one of claims 12 to 19, **characterized in that** in the path of flow of the hot gases produced in the firing unit (110) a flue gas dust collector is used downstream of the gas/gas heat exchanger (120).

21. The method as defined in any one of claims 12 to 20, **characterized in that** in the path of flow of the hot gases produced in said firing unit (110) a ventilating device (122) assisting the outflow of said hot gases is used downstream of the gas/gas heat exchanger (120).

22. The method as defined in claim 21, **characterized in that** the residual heat of the hot gases emerging from said ventilating device (122) is used as useful heat for another consumer unit (123).

## Revendications

1. Dispositif (100) de production de force et de chaleur comportant une unité de chauffe (110) générant des gaz chauds, l'énergie thermique des gaz chauds étant utilisable par l'intermédiaire d'un échangeur de chaleur gaz/gaz (120) pour chauffer de l'air comprimé au moyen d'un compresseur (130) pour le fonctionnement d'une turbine (140) couplée à un générateur électrique (141), l'énergie thermique de l'air chaud se trouvant à la sortie de la turbine (140) étant utilisable par l'intermédiaire d'au moins un échangeur de chaleur gaz/liquide (150) pour vaporiser le liquide d'un cycle organique de Rankine (ORC) pour le fonctionnement d'une autre turbine ORC (120) couplée à un générateur électrique (211), **caractérisé en ce que** du gaz ORC se trouvant à la sortie de la turbine ORC (210) est condensé dans un condensateur (220) fournissant de la chaleur utile et **en ce que** le liquide ORC ainsi récupéré peut être ramené dans l'échangeur de chaleur gaz/liquide (150) par l'intermédiaire d'une pompe (230), et **en ce que** le gaz ORC se trouvant à la sortie de la turbine ORC (210) s'écoule dans le condensateur (220) par un premier côté (231) d'un régénérateur (230), et une partie de liquide ORC récupéré peut être ramené dans l'échangeur de chaleur gaz/liquide (150) par un deuxième côté (232) du régénérateur (230), et une autre partie du liquide ORC se trouvant à la sortie du condensateur (220) peut être ramené au moins indirectement dans l'échangeur de chaleur gaz/liquide (150) par l'intermédiaire d'un échangeur de chaleur de préchauffage (260) agencé en aval de l'échangeur de chaleur gaz/gaz (120).

2. Dispositif selon la revendication 1, **caractérisé en ce que**, pour le refroidissement du condensateur (220), il est prévu une unité d'échange de chaleur (221) comprenant un circuit de refroidissement dont l'énergie thermique peut être amenée en tant que chaleur utile (240) à une autre unité de consommation (250).

3. Dispositif selon une des revendications précédentes, **caractérisé en ce que** l'air chaud se trouvant à la sortie de l'échangeur de chaleur gaz/liquide (150) est utilisable en tant qu'air de combustion préchauffé pour l'unité de chauffe (110).

4. Dispositif selon la revendication 3, **caractérisé en ce que**, pour un dosage de l'apport d'air chaud, un ou plusieurs équipements de commande (160, 161) est prévu en amont de l'unité de chauffe (110), sur la voie d'acheminement de l'air chaud se trouvant à la sortie de l'échangeur de chaleur gaz/liquide (150).

5. Dispositif selon une des revendications précédentes, **caractérisé en ce qu'**une partie de l'air chaud se trouvant à la sortie de l'échangeur de chaleur gaz/liquide (150) est utilisable pour le séchage de biomasse (180) humide placée dans un équipement de séchage (170) autour duquel circule de l'air chaud, laquelle biomasse est prévue sous forme sèche (190) pour une chauffe dans l'unité de chauffe (110).

6. Dispositif selon la revendication 6, **caractérisé en ce que** la biomasse (180) est constituée de copeaux de bois.

7. Dispositif selon une des revendications 5 ou 6, **caractérisé en ce qu'**un équipement de commande (162) est prévu en amont de l'équipement de séchage (170), sur la voie d'acheminement de l'air chaud se trouvant à la sortie de l'échangeur de chaleur gaz/liquide (150), pour un dosage de l'apport d'air chaud.

8. Dispositif selon une des revendications précédentes, **caractérisé en ce qu'**un échangeur supplémentaire de chaleur (151) destiné à préchauffer le liquide ORC est prévu dans le cycle ORC en amont de l'échangeur de chaleur gaz/liquide (150) et sur la voie d'acheminement de l'air chaud provenant de la turbine (140) en aval de l'échangeur de chaleur gaz/liquide (150).

9. Dispositif selon une des revendications précédentes, **caractérisé en ce qu'**un purificateur de gaz de fumée (121) est prévu sur la voie d'acheminement des gaz chauds générés dans l'unité de chauffe (110), en aval de l'échangeur de chaleur gaz/gaz (120).

10. Dispositif selon une des revendications précédentes, **caractérisé en ce qu'**un équipement de ventilation (122) pour l'acheminement des gaz chauds est prévu sur la voie d'acheminement des gaz chauds générés dans l'unité de chauffe (110), en aval de l'échangeur de chaleur gaz/gaz (120).

11. Dispositif selon la revendication 10, **caractérisé en ce que** la chaleur résiduelle des gaz chauds s'échappant de l'équipement de ventilation (122) est acheminable en tant que chaleur utile à une autre unité de consommation (123).

12. Procédé de production de force et de chaleur comportant une unité de chauffe (110) générant des gaz chauds, l'énergie thermique des gaz chauds étant utilisée par l'intermédiaire d'un échangeur de chaleur gaz/gaz (120) pour chauffer de l'air comprimé au moyen d'un compresseur (130) pour le fonctionnement d'une turbine (140) couplée à un générateur électrique (141), l'énergie thermique de l'air chaud se trouvant à la sortie de la turbine (140) étant utilisée par l'intermédiaire d'au moins un échangeur de chaleur gaz/liquide (150) pour vaporiser le liquide d'un cycle organique de Rankine (ORC) pour le fonctionnement d'une autre turbine ORC (120) couplée à un générateur électrique (211), **caractérisé en ce que** le gaz ORC se trouvant à la sortie de la turbine ORC (210) est condensé dans un condensateur (220) fournissant de la chaleur utile et **en ce que** le liquide ORC ainsi récupéré est ramené dans l'échangeur de chaleur gaz/liquide (150) par l'intermédiaire d'une pompe (230), et **en ce que** le gaz ORC se trouvant à la sortie de la turbine ORC (210) s'écoule dans le condensateur (220) par un premier côté (231) d'un régénérateur (230), et une partie de liquide ORC récupéré est ramenée dans l'échangeur de chaleur gaz/liquide (150) par un deuxième côté (232) du régénérateur (230), et une autre partie du liquide ORC se trouvant à la sortie du condensateur (220) est ramenée au moins indirectement dans l'échangeur de chaleur gaz/liquide (150) par l'intermédiaire d'un échangeur de chaleur de préchauffage (260) agencé en aval de l'échangeur de chaleur gaz/gaz (120).

13. Procédé selon la revendication 12, **caractérisé en ce que**, pour le refroidissement du condensateur (220), il est prévu une unité d'échange de chaleur (221) comprenant un circuit de refroidissement dont l'énergie thermique est amenée en tant que chaleur utile (240) à une autre unité de consommation (250).

14. Procédé selon une des revendications précédentes, **caractérisé en ce que** l'air chaud se trouvant à la sortie de l'échangeur de chaleur gaz/liquide (150) est utilisé en tant qu'air de combustion préchauffé pour l'unité de chauffe (110).

15. Procédé selon la revendication 14, **caractérisé en ce qu'**un dosage de l'apport d'air chaud a lieu au moyen d'un ou de plusieurs équipements de commande (160, 161) en amont de l'unité de chauffe (110), sur la voie d'acheminement de l'air chaud se trouvant à la sortie de l'échangeur de chaleur gaz/liquide (150).

16. Procédé selon une des revendications 14 ou 15;
**caractérisé en ce qu'**une partie de l'air chaud se trouvant à la sortie de l'échangeur de chaleur gaz/liquide (150) est employée pour le séchage de biomasse (180) humide entreposée dans un équipement de séchage (170) autour duquel circule de l'air chaud, laquelle biomasse est utilisée sous forme sèche (190) pour une chauffe dans l'unité de chauffe (110).

17. Procédé selon la revendication 16, **caractérisé en ce que** la biomasse (180) est constituée de copeaux de bois.

18. Procédé selon une des revendications 16 ou 17, **caractérisé en ce qu'**un dosage de l'apport d'air chaud a lieu en amont de l'équipement de séchage (170), sur la voie d'acheminement de l'air chaud se trouvant à la sortie de l'échangeur de chaleur gaz/liquide (150), au moyen d'un équipement de commande (162).

19. Procédé selon une des revendications de 12 à 18, **caractérisé en ce qu'**un échangeur supplémentaire de chaleur (151) destiné à préchauffer le liquide ORC est utilisé dans le cycle ORC en amont de l'échangeur de chaleur gaz/liquide (150) et sur la voie d'acheminement de l'air chaud provenant de la turbine (140) en aval de l'échangeur de chaleur gaz/liquide (150).

20. Procédé selon une des revendications de 12 à 19, **caractérisé en ce qu'**un purificateur de gaz de fumée (121) est utilisé sur la voie d'acheminement des gaz chauds générés dans l'unité de chauffe (110), en aval de l'échangeur de chaleur gaz/gaz (120).

21. Procédé selon une des revendications de 12 à 20, **caractérisé en ce qu'**un équipement de ventilation (122) pour l'acheminement des gaz chauds est utilisé sur la voie d'acheminement des gaz chauds générés dans l'unité de chauffe (110), en aval de l'échangeur de chaleur gaz/gaz (120).

22. Procédé selon la revendication 21, **caractérisé en ce que** la chaleur résiduelle des gaz chauds s'échappant de l'équipement de ventilation (122) est utilisée en tant que chaleur utile pour une autre unité de consommation (123)
